(19) **Europäisches Patentamt European Patent Office Office européen des brevets**

(11) **EP 4 609 978 A1**

(12) **EUROPEAN PATENT APPLICATION**

(43) Date of publication:
03.09.2025   Bulletin 2025/36

(21) Application number: 25158667.3

(22) Date of filing: 18.02.2025

(51) International Patent Classification (IPC):
**B23K 9/067** (2006.01)     **B23K 9/18** (2006.01)

(52) Cooperative Patent Classification (CPC):
**B23K 9/0671; B23K 9/186**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority:   28.02.2024   JP 2024028448

(71) Applicant: DAIHEN Corporation
**Yodogawa-ku
Osaka-shi
Osaka 532-8512 (JP)**

(72) Inventors:
• **BABA, Hayato
Osaka-shi 532-8512 (JP)**
• **MIYAJIMA, Yuichi
Osaka-shi 532-8512 (JP)**
• **HONDA, Reo
Osaka-shi 532-8512 (JP)**

(74) Representative: **Boult Wade Tennant LLP
Salisbury Square House
8 Salisbury Square
London EC4Y 8AP (GB)**

(54)    **SUBMERGED ARC WELDING SYSTEM**

(57)    A submerged arc welding system includes a welding power supply, a welding wire feeder, a control unit for the welding power supply and the welding wire feeder, and a voltage sensor to detect voltage between the tip of the welding wire and a workpiece. Under the control of the control unit, the wire feeder feeds the welding wire at an initial feed speed at start of welding. Further, when the tip of the welding wire shorts to the workpiece, the wire feeder stops the feeding of the welding, and the welding power supply starts outputting welding current. Further, when a detection voltage detected by the voltage sensor reaches or exceeds a voltage threshold, the wire feeder starts feeding the welding wire at a welding feed speed for welding.

FIG.1A

EP 4 609 978 A1

## Description

FIELD

The present disclosure relates to a submerged arc welding system for performing submerged arc welding.

BACKGROUND

Submerged arc welding is conventionally known. In submerged arc welding, granular flux is applied over a workpiece, a welding wire is then fed into the flux, and then an arc is generated between the tip of the welding wire and the workpiece to perform welding. In submerged arc welding, thick plates can be welded with high efficiency by passing a large current in a thick welding wire.

JP-A-2022-45136 discloses a welding power supply system that automates the operation at the start of submerged arc welding and that also prevents impurities from mixing into the bead formed after the welding. The welding power supply system disclosed in the document sets a start current period, during which a start current is applied while the feed speed of the welding wire is set low. By setting such a start current period, the welding power supply system achieves good starting performance.

SUMMARY

However, the method disclosed in JP-A-2022-45136 requires to adjust three parameters: the start current, the feed speed of the welding wire, and the end condition of the start period. Thus, the condition adjustment for achieving good starting performance is not easy. Furthermore, at the start of welding, the welding power supply system performs the process of checking the contact state between the tip of the welding wire and the workpiece and subsequently passing a start current, which takes time. In addition, in submerged arc welding, to perform arc start with the second or a subsequent electrode during the multi-electrode welding, the welding wire may be inserted into the molten pool formed by the preceding electrode and a current is passed to generate an arc. For such an arc start method for the second or a subsequent electrode, the step of checking and controlling the contact state hinders smooth arc start. Therefore, the control at the arc start needs to be switched depending on the arc start method, which results in poor operability.

In light of the above-circumstances, an object of the present disclosure is to provide a submerged arc welding system that does not require switching the control at the start of welding depending on the arc start method and that facilitates the parameter adjustment.

A submerged arc welding system for performing submerged arc welding provided according to the present disclosure includes: a welding power supply including an inverter circuit and configured to supply electric power; a wire feeder configured to feed a welding wire; a control unit configured to control the welding power supply and the wire feeder; and a voltage sensor configured to detect voltage applied between a tip of the welding wire and a workpiece. The control unit is configured to: cause the wire feeder to feed the welding wire at an initial feed speed at start of welding; cause the wire feeder to stop the feeding of the welding while also causing the welding power supply to start outputting welding current, when a tip of the welding wire shorts to the workpiece; and cause the wire feeder to start feeding the welding wire at a welding feed speed for welding, when a detection voltage detected by the voltage sensor reaches or exceeds a voltage threshold.

In a preferred embodiment of the present disclosure, the welding power supply has output characteristics that match predetermined external characteristics, and a characteristic line representing the external characteristics has a slope that is equal to or greater than -40V/100A and equal to or less than -0.5V/100A.

In a preferred embodiment of the present disclosure, the voltage threshold is equal to or greater than 20V and equal to or less than 40V.

In a preferred embodiment of the present disclosure, the control unit causes the welding power supply to start outputting a short-circuit release current when the detection voltage is less than a predetermined voltage after a predetermined time has elapsed since the welding power supply starts outputting the welding current.

In a preferred embodiment of the present disclosure, the welding wire includes a tip surface that is inclined with respect to a plane that is orthogonal to a direction in which the welding wire extends.

In a preferred embodiment of the present disclosure, the submerged arc welding system further includes a carriage that carries the wire feeder and that is configured to move along a welding line (weld joint line), where the control unit controls movement of the carriage independently from control of the wire feeder and the welding power supply at the start of welding.

According to the present disclosure, at the start of welding, the control unit stops the feeding of the welding wire upon detecting a short circuit. The control unit then starts the output of the welding current without passing the start current for generating arc. Thereafter, when the detection voltage reaches or exceeds the voltage threshold, the control unit starts the feeding of the welding wire at the welding feed speed. Therefore, the operator only needs to set the voltage threshold and does not need to set the start current or the feed speed for the period from the short-circuit detection to the switching to the welding feed speed. Therefore, the parameter adjustment is easy. Further, the start control process at the start of welding can be commonly used for various arc start methods. Therefore, the control at the start of welding does not need to be changed depending on the arc start method.

DRAWINGS

    Figs. 1 are diagrams for describing a welding system according to a first embodiment, where Fig. 1A is a brock diagram showing the overall structure of the welding system, and Fig. 1B is a block diagram showing the internal structure of the welding power supply.

    Fig. 2 shows an example of characteristic line of the external characteristics set by a control circuit.

    Fig. 3 is an example of the flow chart of a start control process.

    Fig. 4 is a timing chart showing the state when the start control process is performed by the welding system according to the first embodiment.

    Fig. 5 is a timing chart showing the state when the start control process employing another arc start method is performed by the welding system according to the first embodiment.

    Fig. 6 is a timing chart showing the state when the short-circuit release process is performed in combination with the start control process by the welding system according to the first embodiment.

    Fig. 7 is a simplified diagram showing the tip surface of the electrode according to a second embodiment.

    Fig. 8 is a simplified diagram for describing the movement of the electrode according to a third embodiment.

EMBODIMENTS

The following describes preferred embodiments of the present disclosure in detail with reference to the drawings.

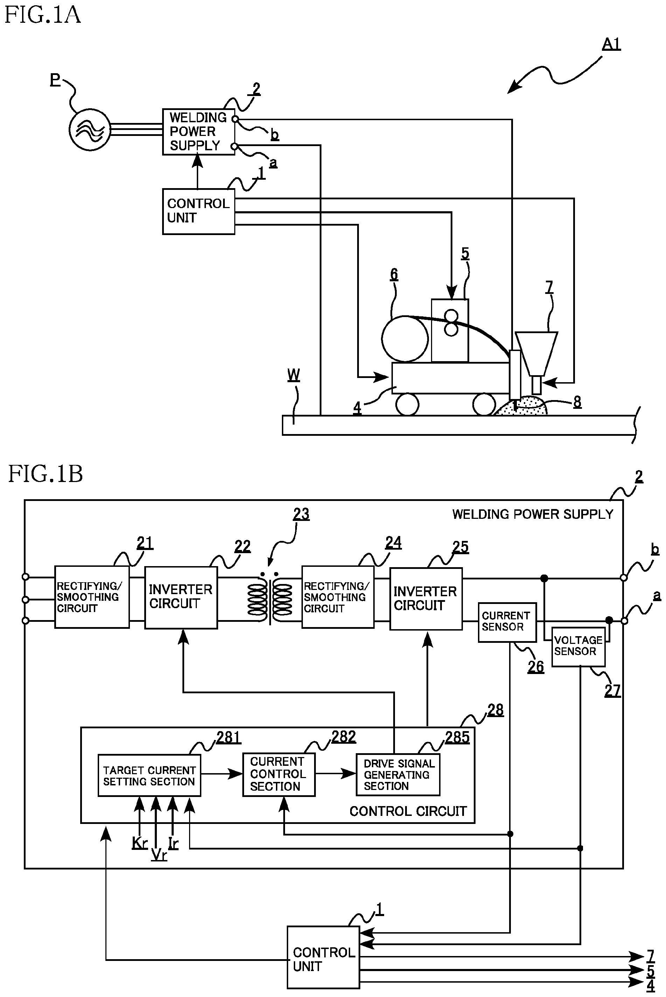

Figs. 1 are views for describing a welding system according to the first embodiment. Fig. 1A is a block diagram showing the overall structure of the welding system. Fig. 1B is a block diagram showing the internal structure of a welding power supply.

The welding system A1 is a system for performing submerged arc welding. As shown in Fig. 1A, the welding system A1 includes a control unit 1, a welding power supply 2, a carriage 4, a wire feeder 5, a wire reel 6, a flux applying device 7, and an electrode 8. The welding system A1 moves the carriage 4 along the welding line of the workpiece W while applying granular flux stored in the hopper of the flux applying device 7. The wire feeder 5 then feeds a welding wire into the flux. The welding wire is supplied from the wire reel 6. The welding power supply 2 converts the AC power supplied from a commercial power supply P into power suitable for welding and outputs the power, to thereby generate, within the flux, an arc between the electrode 8, which is the tip of the welding wire, and the workpiece W. The arc heat causes welding.

In this way, welding is performed along the welding line of the workpiece W. Instead of using the carriage 4, the workpiece W may be moved or turned.

The control unit 1 performs various controls for the welding system A1. The control unit 1 may be a general-purpose computer with a program for various controls of the welding system A1 installed in it, or may be a dedicated device for the control of the welding system A1. The control unit 1 moves the carriage 4 at a predetermined travel speed. The travel speed is determined based on the material and thickness of the workpiece W or other factors. The control unit 1 instructs the flux applying device 7 to start or stop the application of the flux. Incidentally, the start and stop of the flux application by the flux applying device 7 may be performed manually. The control unit 1 instructs the wire feeder 5 to start or stop feeding the welding wire and the feeding speed of the welding wire. The welding feed speed for welding is set based on the set welding current or other factors. The control unit 1 instructs the welding power supply 2 to start or stop the power output. The details of the control performed by the control unit 1 at the start of welding will be described later.

The welding power supply 2 converts the AC power supplied from the commercial power supply P into desired power and outputs it. Instead of the welding power supply 2, use may be made of a plurality of welding power supplies 2 connected in parallel. (Specifically, the output terminals a of welding power supplies 2 are connected to each other and connected to the workpiece W, while the output terminals b of the welding power supplies 2 are connected to each other and connected to the welding wire.)

As shown in Fig. 1B, the welding power supply 2 includes a rectifying/smoothing circuit 21, an inverter circuit 22, a transformer 23, a rectifying/smoothing circuit 24, an inverter circuit 25, a current sensor 26, a voltage sensor 27, and a control circuit 28.

The rectifying/smoothing circuit 21 converts the AC power inputted from the commercial power supply P into DC power and outputs the DC power. The inverter circuit 22 converts the DC power inputted from the rectifying/smoothing circuit 21 into high-frequency power by switching the switching elements in accordance with an output control drive signal inputted from the control circuit 28, and outputs the high-frequency power. The transformer 23 transforms the high-frequency voltage outputted from the inverter circuit 22 and outputs it to the rectifying/smoothing circuit 24. The rectifying/smoothing circuit 24 converts the high-frequency power inputted from the transformer 23 into DC power and outputs the DC power.

The inverter circuit 25 converts the DC power inputted from the rectifying/smoothing circuit 24 into AC power by switching the switching elements in accordance with a switching drive signal inputted from the control circuit 28, and outputs the AC power. The inverter circuit 25 performs switching between the forward polarity where the potential of the output terminal a (connected to the workpiece W) is higher than the potential of the output terminal b (connected to the welding wire) and the reversed polarity where the potential of the output terminal a is lower than the potential of the output terminal b.

The current sensor 26 detects the output current of the welding power supply 2. In the present embodiment, the current sensor 26 is placed on the connection line connecting one of the output terminals of the inverter circuit 25 and the output terminal a. The output current of the welding power supply 2 detected by the current sensor 26 is approximately equal to the current flowing in the electrode 8. The current sensor 26 outputs a current value signal corresponding to the detected instantaneous current value to the control circuit 28 and the control unit 1. The configuration of the current sensor 26 is not limited, and any configuration that can detect the output current from the connecting line can be employed. Also, the position of the current sensor 26 is not limited. For example, the current sensor 26 may be disposed on the connection line connecting another output terminal of the inverter circuit 25 and the output terminal b. The current sensor 26 may be disposed outside the welding power supply 2.

The voltage sensor 27 detects the output voltage of the welding power supply 2. In the present embodiment, the voltage sensor 27 detects the voltage between the output terminal a and the output terminal b. This voltage is approximately equal to the voltage applied between the workpiece W and the tip of the electrode 8. The voltage sensor 27 outputs a voltage value signal corresponding to the detected instantaneous voltage value to the control circuit 28 and the control unit 1. The configuration of the voltage sensor 27 is not limited. Also, the position of the voltage sensor 27 is not limited. For example, the voltage sensor 27 may detect the voltage between the lead wire attached to a welding torch that guides the welding wire to the welding point and the lead wire attached to the workpiece W. The voltage sensor 27 may be disposed outside the welding power supply 2.

The control circuit 28 controls the welding power supply 2 and may be implemented by a microcomputer, for example. The control circuit 28 receives the current value signal from the current sensor 26, the voltage value signal from the voltage sensor 27, and various command signals and various set values from the control unit 1. The control circuit 28 outputs drive signals to the inverter circuit 22 and the inverter circuit 25.

When receiving from the control unit 1 a command signal instructing to start the power output, the control circuit 28 starts outputting a drive signal to each of the inverter circuit 22 and the inverter circuit 25 to thereby start the power output. Also, when receiving from the control unit 1 a command signal instructing to stop the power output, the control circuit 28 stops the output of the drive signal to thereby stop the power output.

The control circuit 28 controls the output current and the output voltage such that the output characteristics of the welding power supply 2 match the external characteristics set in advance. The external characteristics indicate the relationship between the welding current and the welding voltage, and is generally represented by a characteristic line(s). The control circuit 28 sets the external characteristics by setting an arithmetic expression that represents the characteristic line approximately or in a properly simplified manner. As the external characteristics, the control circuit 28 sets the so-called constant voltage characteristics, where the welding voltage does not change significantly with change in the welding current.

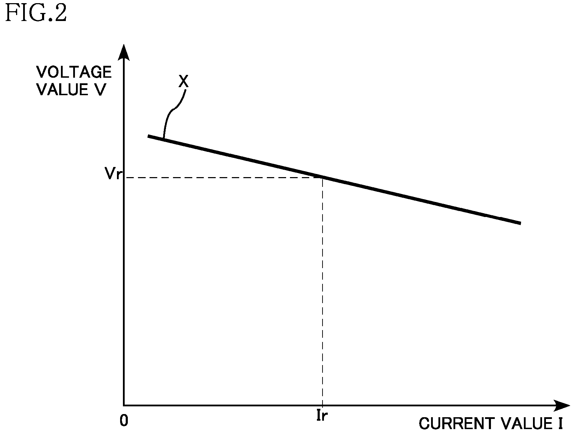

Fig. 2 shows an example of the characteristic line representing the external characteristics set by the control circuit 28. In the figure, the horizontal axis indicates the current value I, while the vertical axis indicates the voltage value V. In Fig. 2, the characteristic line X of the external characteristics is a straight line with a slope Kr, where the voltage value V when the current value I is the reference current value Ir is the reference voltage value Vr. The function that represents the external characteristics is equation (1) below.

$$V = Kr \cdot (I - Ir) + Vr \quad (1)$$

The slope Kr is not limited. However, it is important to quickly obtain an appropriate arc length at the arc start. The arc length is corelated to the welding voltage. As the external characteristics are closer to the complete constant voltage characteristics (Kr=0), the welding voltage converges to the desired welding voltage more quickly. When the slope Kr is greater than -0.5V/100A, the effect of voltage change caused by voltage noise or the like is large. When the slope Kr is less than -40V/100A, the amount of current change in response to voltage change is too small, making the wire melting amount of a thick welding wire less likely to change. In the present embodiment, therefore, the slope Kr is set to be equal to or greater than -40V/100A and equal to or less than -0.5V/100A. That is, the external characteristics set by the control circuit 28 are such that the voltage drop for a current increase of 100A is equal to or greater than 0.5V and equal to or less than 40V. It is desirable that the slope Kr is equal to or greater than -15V/100A and equal to or less than -1.5V/100A.

The control circuit 28 includes, as its functional components, a target current setting section 281, a current control section 282, and a drive signal generating section 285.

The target current setting section 281 functions to set the target current, which is the target value for the output current of the welding power supply 2. The target current setting section 281 sets the function (equation (1) above) representing the external characteristics based on the slope Kr, the reference voltage value Vr, and the reference current value Ir that are set in advance.

The target current setting section 281 sets the target current based on the function representing the external characteristics and the voltage value V (e.g., effective voltage value) corresponding to the voltage value signal inputted from the voltage sensor 27. Specifically, the target current setting section 281 calculates the current value I by assigning the voltage value V, which is the output voltage of the welding power supply 2 detected by the voltage sensor 27, to the above equation (1), and sets the calculated current value I as the target current. The target current setting section 281 outputs the set target current to the current control section 282.

The current control section 282 functions to control the output current of the welding power supply 2. The current control section 282 performs feedback control such that the output current of the welding power supply 2 corresponds to the target current. Specifically, the current control section 282 calculates the deviation between the current value signal inputted from the current sensor 26 and the target current inputted from the target current setting section 281. The current control section 282 then performs calculations using, for example, PI control, on the calculated deviation and outputs the calculated value to the drive signal generating section 285.

The drive signal generating section 285 functions to generate an output control drive signal to be outputted to the inverter circuit 22. Based on the calculated value inputted from the current control section 282, the drive signal generating section 285 generates the output control drive signal for PWM control by a triangular wave comparison method, for example. The drive signal generating section 285 outputs the generated output control drive signal to the inverter circuit 22.

The inverter circuit 22 converts the DC power inputted from the rectifying/smoothing circuit 21 into high-frequency power by switching the switching elements in accordance with the output control drive signal inputted from the drive signal generating section 285, and outputs the high-frequency power. The high-frequency power is converted into DC power via the transformer 23 and the rectifying/smoothing circuit 24, then converted into AC power by the inverter circuit 25, and then outputted from the welding power supply 2. The output current of the welding power supply 2 is controlled to the target current set by the target current setting section 281.

The internal structure of the control circuit 28 is not limited to the above. The control circuit 28 may have other configuration as long as it can control the output current and the output voltage such that the output characteristics of the welding power supply 2 match the set external characteristics.

When receiving from the control unit 1 a command signal to output a direct current, the control circuit 28 outputs to the inverter circuit 25 a switching drive signal that keeps a predetermined switching element(s) in the on state and keeps other switching elements in the off state. For example, the switching elements are fixed such that the output terminal on the positive side of the rectifying/smoothing circuit 24 is connected to the output terminal a while the output terminal on the negative side of the rectifying/smoothing circuit 24 is connected to the output terminal b. As a result, the welding power supply 2 outputs DC power with the output terminal a as the positive terminal and the output terminal b as the negative terminal. In other words, the welding system A1 is an AC/DC welding system that can output both AC and DC. Also, the welding power supply 2 can control the output current based on a current command value inputted from the control unit 1. Thus, the welding system A1 is capable of properly controlling the output current.

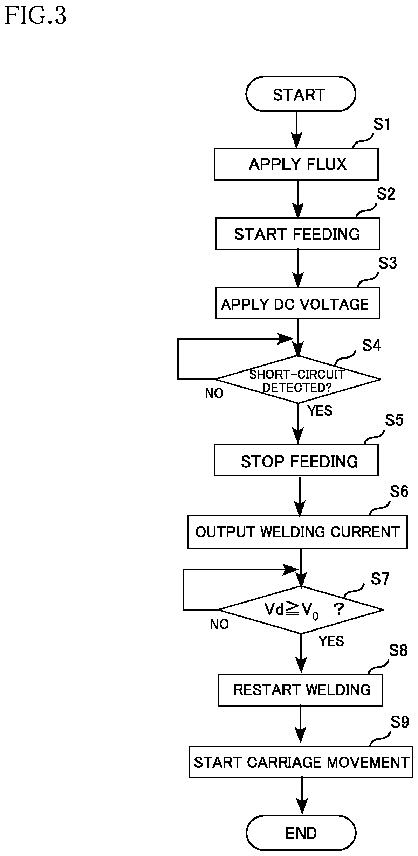

Next, the control processing performed by the control unit 1 at the start of welding will be described. Fig. 3 is an example of a flowchart showing the start control process performed by control unit 1 at the start of welding. The start control process begins, for example, when the operation button to start the welding is pressed.

First, the application of flux to the weld starting point and the surrounding area of the workpiece W is started (S1). Specifically, the control unit 1 instructs the flux applying device 7 to apply flux. The flux applying device 7 applies the appropriate amount of flux set in advance. Next, the feeding of the welding wire is started (S2). Specifically, the control unit 1 instructs the wire feeder 5 to start feeding the welding wire. At this time, the control unit 1 issues instructions to feed the welding wire at an initial feed speed in the forward direction (from the wire reel 6 toward the carriage 4). The initial feed speed is the so-called slow-down speed and sufficiently low (e.g., about 0.5 m/min, but not limited) as compared with the welding feed speed.

Next, the application of DC voltage (no-load voltage) between the workpiece W and the electrode 8 is started (S3). Specifically, the control unit 1 instructs the welding power supply 2 to output DC voltage. In the welding power supply 2 of the present embodiment, the inverter circuit 25 can output DC voltage under the control by the control circuit 28. The welding power supply 2 may additionally include a DC power supply connected in parallel to the output terminals a and b, and the DC power supply may output the DC voltage to be applied between the workpiece W and the electrode 8. The no-load voltage is not limited but may be about 100 V, for example.

Next, whether or not the electrode 8 has come into contact with the workpiece W to cause a short circuit is determined (S4). Specifically, the control unit 1 makes the determination based on the voltage value signal inputted from the voltage sensor 27. When the electrode 8 short-circuits to the workpiece W, the voltage between the electrode 8 and the workpiece W drops rapidly to approach 0. The control unit 1 determines that the short-circuit has occurred when the voltage detected by the voltage sensor 27 (hereinafter referred to as the "detected voltage") drops to or below a short-circuit detection threshold. The method for determining the short-circuit is not limited. For example, the control unit 1 may determine the short-circuit based on the current value signal inputted from the current sensor 26. When the short-circuit is not detected (S4: NO), the process returns to Step S4 to repeat the determination of S4. That is, the control unit 1 waits until the short-circuit is detected. When the short-circuit is detected (S4: YES), the feeding of the welding wire is stopped (S5). Specifically, the control unit 1 instructs the wire feeder 5 to stop feeding the welding wire.

Next, the output of the welding current is started (S6). Specifically, the control unit 1 instructs the welding power supply 2 to output the welding current for actual welding that depends on the welding conditions. The control circuit 28 of the welding power supply 2 controls the output current and the output voltage such that the output characteristics match the set external characteristics (the constant voltage characteristics). Therefore, the welding current and the welding voltage outputted from the welding power supply 2 satisfy the relationship represented by the above equation (1).

Next, it is determined whether or not the detection voltage $V_d$ detected by the voltage sensor 27 has reached or exceeded the preset voltage threshold $V_0$ (S7). The voltage threshold $V_0$ is the threshold to determine that an arc is generated by the welding current and stably maintained. The voltage when the length of the arc reaches a desired length is set as the voltage threshold $V_0$. The voltage threshold $V_0$ is not limited, but is preferably equal to or greater than 20V and equal to or less than 40V. When the voltage threshold $V_0$ is set to a value less than 20V, a sufficient arc length may not be obtained. When the voltage threshold $V_0$ is set to a value greater than 40V, the arc length can become excessively long, making the arc easily breakable. In the present embodiment, the voltage threshold $V_0$ is set to 30 V. It is confirmed that in this case, good starting performance is achieved under the conditions where the wire diameter is at least $\varphi 2.4$ mm to $\varphi 6.4$ mm and the welding current is 300 A to 1500 A in an environment where the output terminal b of the welding power supply 2 and the electrode 8 are electrically connected with a power cable that is about 40 m in length. The appropriate value for the voltage threshold $V_0$ varies depending on the condition of the power cable and also depending on the position at which the voltage sensor 27 detects the voltage. Therefore, the voltage threshold $V_0$ to be set actually may be adjusted by the operator in light of the situation. The control unit 1 may store a table that associates various conditions, such as the wire diameter, the wire material, the set value for the welding current and the length of the power cable, with the optimal voltage thresholds $V_0$, and may automatically set the voltage threshold $V_0$ appropriate for the condition.

In the present embodiment, the period from when the electrode 8 is shorted to the workpiece W until when the detection voltage $V_d$ reaches the voltage threshold $V_0$ (i.e., until the arc stabilizes) is set as the start period. The purpose of setting the start period is to achieve a desired arc length regardless of the arc start method, various conditions, or the environment. The arc length is correlated with the voltage. This is why the detection voltage $V_d$ reaching or exceeding the voltage threshold $V_0$ is set as the end condition of the start period.

When the detection voltage $V_d$ has not reached or exceeded the voltage threshold $V_0$ (S7: NO), the process returns to Step S7 to repeat the determination of S7. That is, the control unit 1 waits until the detection voltage $V_d$ reaches or exceeds the voltage threshold $V_0$. When the detection voltage $V_d$ reaches or exceeds the voltage threshold $V_0$, the feeding of the welding wire is restarted (S8). Specifically, the control unit 1 instructs the wire feeder 5 to restart feeding the welding wire. At this time, the welding wire is fed at the welding feed speed that is set as the welding conditions. Next, the movement of the carriage 4 is started (S9), and the start control process ends. After the start control process ends, the welding wire continues to be fed at the welding feed speed set as the welding conditions, while the welding power continues to be outputted to provide the welding current and the welding voltage appropriate for the welding conditions. The application of flux by the flux applying device 7 and the movement of the carriage 4 are also continued.

The processing shown in the flowchart of Fig. 3 is just one example, and the start control process performed by the control unit 1 is not limited to that described above.

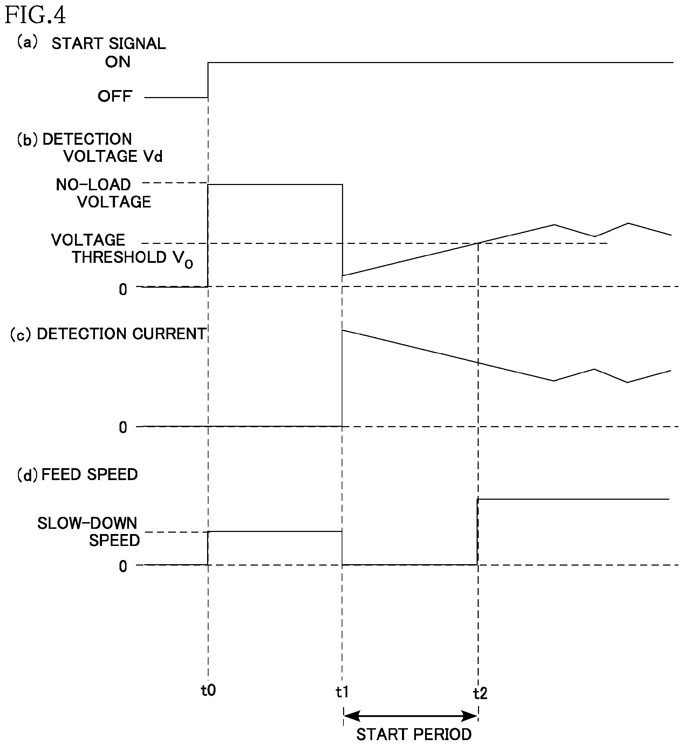

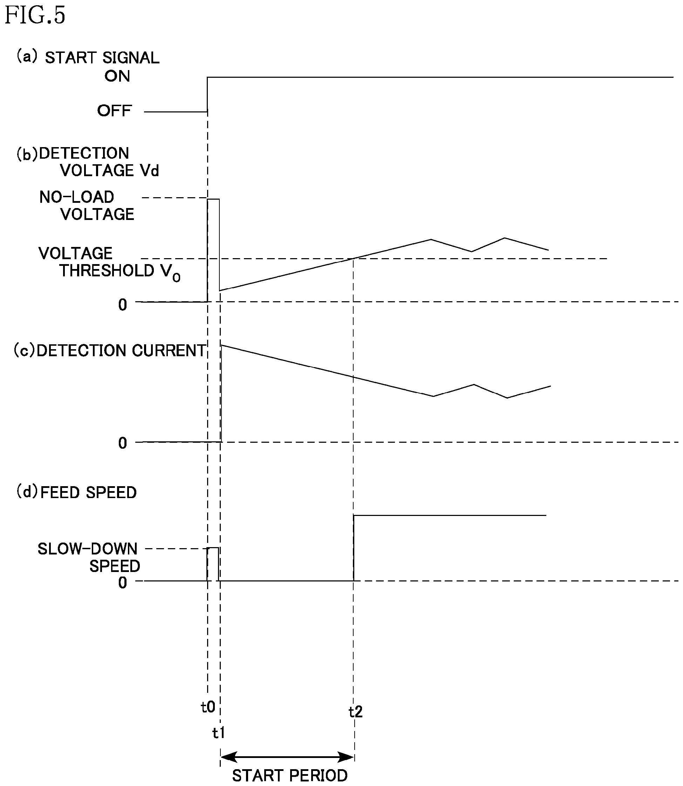

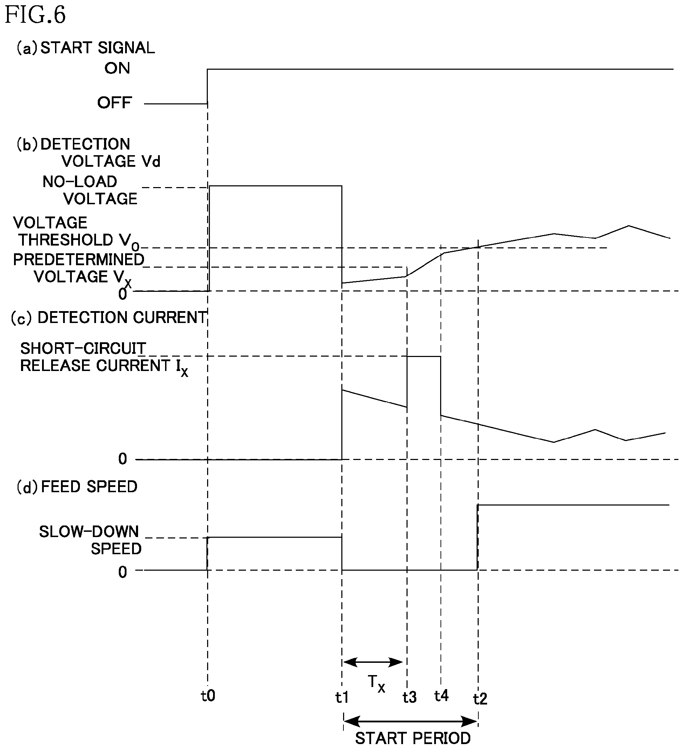

Fig. 4 is a timing chart showing the state when the start control process is performed by the welding system A1. In the figure, (a) shows time variation of the welding start signal. In the figure, (b) shows time variation of the detection voltage $V_d$ detected by the voltage sensor 27. In the figure, (c) shows time variation of the detection current detected by the current sensor 26. In the figure, (d) shows time variation of the feed speed of the welding wire. When the welding wire is fed in the forward direction, the feed speed has a positive value. When the welding wire is fed in the reverse direction, the feed speed has a negative value. The vertical axis and the horizontal axis of the timing chart shown in Fig. 4 are expanded or reduced as appropriate for easier understanding, and the waveforms shown are also simplified, exaggerated or emphasized for easier understanding. (The same applies to Figs. 5 and 6).

At time t0, the operation button for starting the welding is pressed, so that the start signal is turned on (see Fig. 4(a)). Thus, the start control process begins. At this time, the feeding of the welding wire at the initial feed speed (slow-down speed) in the forward direction is started (see (d) in FIG. 4), and the output of DC voltage is started. In this stage, the detection voltage $V_d$ is the no-load voltage (see (b) in FIG. 4). Flux has been applied in advance to the weld starting point and the surrounding area.

At time t1, the electrode 8 comes into contact with the workpiece W, and a short circuit occurs. As a result, the detection voltage Vd decreases sharply (see (b) in Fig. 4), whereas the detection current increases sharply (see (c) in Fig. 4). By the detection voltage Vd dropping to or below the short-circuit detection threshold, the short-circuit is detected, and the start period begins. At this time, the feeding of the welding wire is stopped, and the feed speed becomes "0" (see (d) in Fig. 4). Also, the output of the welding current is started (see (c) in Fig. 4), and the electrode 8 ignites, generating an arc between the tip of the electrode 8 and the workpiece W. Then, the arc length gradually increases, and the detection voltage Vd gradually increases accordingly (see (b) in Fig. 4). At time t2, by the detection voltage Vd reaching or exceeding the voltage threshold $V_0$, the start period ends, and the feeding of the welding wire is restarted at the welding feed speed.

The above describes the case where the welding system A1 (with a single electrode 8) performs the start control process in the arc start method in which the electrode 8 is brought into contact with the workpiece W. However, the start control process can also be used for the arc start with the second or a subsequent electrode in the multi-electrode submerged arc welding method. In the case of the second or a subsequent electrode, the start signal is turned on to start the start control process when that electrode 8 comes to the welding start position. With no-load voltage applied, the welding wire is fed at the initial feed speed. When the electrode 8 is inserted into the molten pool formed by the preceding electrode and short-circuited, the start period begins. That is, the feeding of the welding wire is stopped, and the output of the welding current starts. When an arc is generated between the tip of the electrode 8 and the workpiece W and the detection voltage Vd reaches or exceeds the voltage threshold $V_0$, the start period ends. At that time, the feeding of the welding wire is restarted at the welding feed speed, and the start control process ends.

The start control process can also be used for the arc start method that uses steel wool. In this case, steel wool intervenes between the electrode 8 and the workpiece W. Therefore, immediately after (within 1 ms from) the start signal is turned on to start the start control process, the electrode 8 is electrically connected to the workpiece W to cause short-circuit detection, as shown in Fig. 5. In response to this, the start period begins; the feeding of the welding wire is stopped, and the output of the welding current is started. Therefore, the welding wire is not substantially fed. When an arc is generated between the tip of the electrode 8 and the workpiece W and the detection voltage Vd reaches or exceeds the voltage threshold $V_0$, the start period ends. At that time, the feeding of the welding wire is restarted at the welding feed speed, and the start control process ends.

The start control process can also be used for the arc start with the tip of the electrode 8 and the workpiece W held in contact with each other. In this case, since the electrode 8 and the workpiece W are in contact with each other, immediately after (within 1 ms from) the start signal is turned on to start the start control process, the electrode 8 is electrically connected to the workpiece W to cause short-circuit detection, as shown in Fig. 5. In response to this, the start period begins; the feeding of the welding wire is stopped, and the output of the welding current is started. Therefore, the welding wire is not substantially fed. When an arc is generated between the tip of the electrode 8 and the workpiece W and the detection voltage Vd reaches or exceeds the voltage threshold $V_0$, the start period ends. At that time, the feeding of the welding wire is restarted at the welding feed speed, and the start control process ends. In this way, the start control process can be commonly used for various arc start methods.

Next, the effects and advantages of the welding system A1 according to the present embodiment will be described.

According to the present embodiment, at the start of welding, the control unit 1 stops the feeding of the welding wire upon detecting a short circuit. The control unit 1 then starts the output of the welding current without passing the start current for generating arc. Thereafter, when the detection voltage Vd reaches or exceeds the voltage threshold $V_0$, the control unit 1 starts the feeding of the welding wire at the welding feed speed. Therefore, the operator only needs to set the voltage threshold $V_0$ and does not need to set the start current or the feed speed for the period from the short-circuit detection to the switching to the welding feed speed. Therefore, the parameter adjustment is easy. Further, the start control process at the start of welding can be commonly used for various arc start methods. Therefore, the control at the start of welding does not need to be changed depending on the arc start method.

According to the present embodiment, the control unit 1 suspends the feeding of the welding wire during the start period. If the welding wire is fed in the forward direction during the start period, the release of the short-circuit may be hindered, or the tip of the electrode 8 may be pressed against the workpiece W to cause a stick phenomenon. On the other hand, if the welding wire is fed in the reverse direction during the start period, the release of the short circuit is accelerated and the appropriate arc length is easily achieved. However, at the moment when the start period ends, it is not possible to feed the welding wire without delay in the forward direction. As a result, the arc length temporarily becomes longer than the intended length. In the present embodiment, since the feeding of the welding wire is suspended during the start period, the release of the short circuit is not hindered, and the occurrence of a stick phenomenon is prevented. Further, the arc length can be easily adjusted to a desired length.

Further, by the control circuit 28 setting the slope Kr of the characteristic line X of the external characteristics to be equal to or greater than -40V/100A and equal to or less than -0.5V/100A, the effect of voltage change caused by voltage noise or the like can be suppressed, and the amount of current change in response to voltage can be appropriately controlled.

In the present embodiment, the voltage threshold $V_0$ is set to be equal to or greater than 20V and equal to or less than 40V. Thus, the welding system A1 can prevent arc breakage while achieving a sufficient arc length at the start of welding. Further, by setting the voltage threshold $V_0$ to 30V, the welding system A1 achieves good starting performance on a wide range of conditions.

In starting the arc, it is important to release the short circuit as quickly as possible. In the start control process, however, the output of the welding current is started during the start period without passing the start current, so that the short circuit may not be easily released if the set welding current is small. To prevent this, the control unit 1 may perform a short-circuit release process in combination with the start control process. The short-circuit release process is the process to accelerate the release of a short circuit by passing a short-circuit release current $I_x$ in the case where the detection voltage Vd is less than a predetermined voltage $V_x$ after a predetermined time $T_x$ has elapsed since the start period began. The predetermined voltage $V_x$ is 15V, for example, and the short-circuit release current $I_x$ is 2000A direct current, for example. The predetermined time $T_x$, the predetermined voltage $V_x$, and the short-circuit release current $I_x$ are not limited. The short-circuit release current $I_x$, which is high current, causes the electrode 8 to burn more intensely, accelerating the release of the short circuit and making it easier for an arc to occur between the tip of electrode 8 and the workpiece W.

Fig. 6 is a timing chart showing the state when the short-circuit release process is performed in combination with the start control process by the welding system A1. Fig. 6 shows the same types of time variations as those shown in Fig. 4. As shown in Fig. 6, at time t3 when the predetermined time $T_x$ has elapsed from time t1, the detection voltage Vd is less than the predetermined voltage $V_x$ (see (b) in Fig. 6). In response to this, the short-circuit release process passes the short-circuit release current $I_x$ from time t3 to time t4 (see (c) in Fig. 6). This causes the detection voltage Vd to rise. The time during which the short-circuit release current $I_x$ is passed is not limited, and may not be fixed. For example, the short-circuit release current $I_x$ may be passed until the detection voltage Vd reaches (or exceeds) the predetermined voltage $V_x$. The short-circuit release process is not limited to the above, and may be any process that promotes the release of a short circuit by passing a high current when the short circuit is not released.

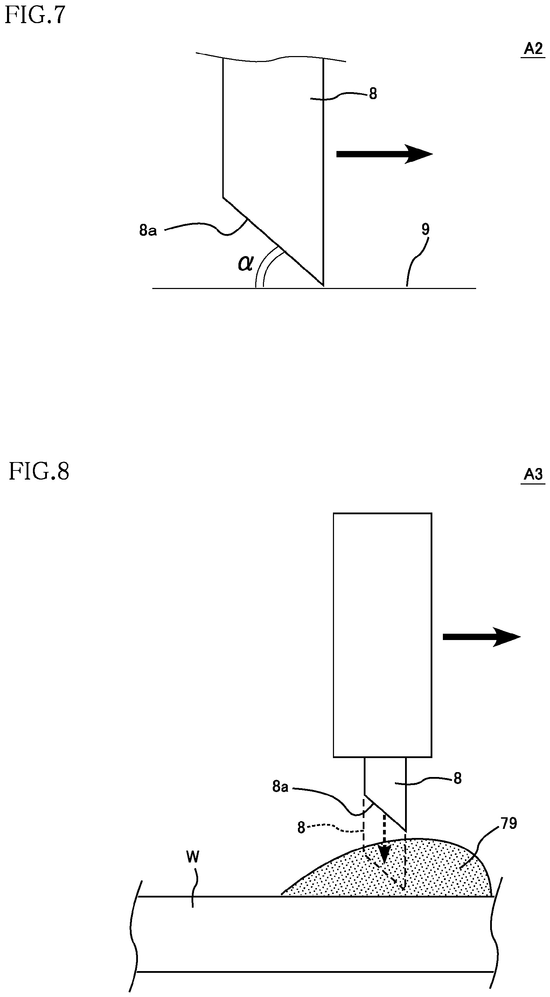

Fig. 7 is a view for describing the welding system A2 according to a second embodiment and is a simplified diagram showing the tip surface of the electrode 8 according to the second embodiment. Because the block diagrams of the overall configuration of the welding system A2 according to the second embodiment and the internal configuration of the welding power supply 2 are the same as those in the case of the welding system A1 shown in Fig. 1, the illustration and description are omitted. The welding system A2 according to the present embodiment differs from the welding system A1 according to the first embodiment in shape of the tip of the electrode 8 (the welding wire).

In the present embodiment, the tip surface 8a of the electrode 8 (the welding wire) is inclined with respect to an orthogonal plane 9 that is orthogonal to the direction in which the electrode 8 extends. The inclination angle $\alpha$ formed by the tip surface 8a and the orthogonal plane 9 is not limited, but is 45° in the present embodiment.

Generally, in the submerged arc welding, the welding wire is cut along a direction orthogonal to the direction in which the welding wire extends. That is, the inclination angle is 0°. In such a case, if the tip surface 8a is smooth and held in close contact with the workpiece W, the electrical resistance near the tip surface 8a would be approximately equal to the electrical resistance at other portions of the welding wire. When the welding current flows in the welding wire, the entire welding wire is heated uniformly by resistance heating, whereby the welding wire melts to break near the intermediate point between the power supply tip (or contact tip) and the workpiece W. In this case, the thick welding wire breaks intensely upon melting, which makes the arc start extremely unstable. Moreover, the tip of the broken welding wire may be flung out of the applied flux, or the arc length may become excessively long, thereby causing arc break. More likely, however, the tip surface 8a is not perfectly smooth and cannot be held entirely in close contact with the workpiece W. Therefore, the portion of the tip surface 8a that comes into contact with the workpiece W has a locally high electrical resistance and melts earlier by resistance heating. Even in such an instance, as the inclination angle $\alpha$ approaches 0°, the increase in resistance becomes smaller at locations, which leads to a higher possibility of wire breakage upon melting, as noted above. As the inclination angle $\alpha$ approaches 90°, the contact area between the welding wire and the workpiece W becomes smaller, which leads to a higher local resistance. In addition, the heat capacity of the tip of the welding wire decreases. Therefore, the tip of the welding wire starts to melt earlier, allowing smooth arc start. At the same time, as the inclination angle $\alpha$ approaches 90° too closely, the cross sectional area of the portion to be cut tends to increase, which requires more effort for cutting the welding wire. In light of the above, it is desirable that the inclination angle $\alpha$ formed between the tip surface 8a and the orthogonal plane 9 is equal to or greater than 30° and equal to or less than 60°. When the inclination angle $\alpha$ is smaller than 30°, the possibility of breakage of the welding wire by melting increases, and the smooth arc start is less likely to be achieved. When the inclination angle $\alpha$ is greater than 60°, cutting the welding wire becomes difficult since it requires very large force.

In the present embodiment, the tip surface 8a of the electrode 8 (the welding wire) faces in the opposite direction to the direction of travel of the carriage 4 (the direction of the arrow shown in the figure). The direction in which the tip surface 8a faces is not limited to this. The tip surface 8a is formed by the operator cutting the welding wire with pliers or the like when the previous welding process is finished. The cutting of the welding wire may be performed immediately before the start of the welding process. In other words, it is only required that the electrode 8 (the welding wire) has been cut to have the tip surface 8a before the welding process starts. In addition, the cutting of the welding wire does not necessarily need to be performed manually by an operator, and may be automated.

In the present embodiment again, at the start of welding, the control unit 1 stops the feeding of the welding wire upon detecting a short circuit. The control unit 1 then starts the output of the welding current without passing the start current for generating an arc. Thereafter, when the detection voltage Vd reaches or exceeds the voltage threshold $V_0$, the control unit 1 starts the feeding of the welding wire at the welding feed speed. Therefore, the operator only needs to set the voltage threshold $V_0$, so that the parameter adjustment is easy. The start control process at the start of welding can be commonly used for various arc start methods. Therefore, the control at the start of welding does not need to be changed depending on the arc start method. The present embodiment has a configuration in common with the first embodiment, thereby achieving the same effect as the first embodiment.

According to the present embodiment, the tip surface 8a of the electrode 8 (the welding wire) is inclined with respect to the orthogonal plane 9. Therefore, when the tip of the electrode 8 (the welding wire) comes into contact with the workpiece W at the start of welding, the contact area is smaller as compared with the case where the tip surface 8a is not inclined with respect to the orthogonal plane 9. This increases the resistance at the point of contact and reduces the heat capacity of the tip of the electrode 8. Therefore, the tip starts to melt earlier, allowing smooth arc start. Also, according to the present embodiment, the inclination angle $\alpha$ formed between the tip surface 8a and the orthogonal plane 9 is equal to or greater than 30° and equal to or less than 60°. Therefore, the occurrence of breakage by melting of the welding wire is suppressed while the effort required to cut the welding wire is reduced.

Fig. 8 is a view for describing the welding system A3 according to a third embodiment and is a simplified diagram for describing the movement of the electrode 8 according to the third embodiment. Because the block diagrams of the overall configuration of the welding system A3 according to the third embodiment and the internal configuration of the welding power supply 2 are the same as those in the case of the welding system A1 shown in Fig. 1, the illustration and description are omitted. The welding system A3 according to the present embodiment differs from the welding system A1 according to the first embodiment in shape of the tip of the electrode 8 (the welding wire) and the start control process performed by the control unit 1.

The shape of the tip of the electrode 8 (the welding wire) according to the present embodiment is the same as that in the second embodiment. The start control process according to the present embodiment does not perform Step S9 (movement control for the carriage 4) of the start control process shown in Fig. 3. The movement control for the carriage 4 is performed independently from the start control process.

According to the start control process of the present embodiment again, flux is first applied (S1), and then the feeding of the welding wire at an initial feed speed for short-circuit detection is started (S2). The electrode 8 is inserted into the applied flux from the outside. If the welding wire is cut along a direction that is orthogonal to the direction in which the welding wire extends as in a conventional technique, the tip surface 8a of the electrode 8 is not inclined with respect to the orthogonal plane (i.e., is parallel to the orthogonal plane). Thus, when the electrode 8 is inserted into the flux, the flux, as an insulator, may be caught between the tip surface 8a of the electrode 8 and the workpiece W. In such a case, the short-circuit cannot be detected, and the arc start fails. According to the present embodiment, in contrast, the tip surface 8a of the electrode 8 is inclined with respect to the orthogonal plane 9. As shown in Fig. 8, this can reduce the possibility that the flux is caught between the tip surface 8a and the workpiece W when the electrode 8 is inserted into the flux 79 (see the dashed arrow and the electrode 8 indicated by dashed lines).

In the case where the start control process controls the start of the movement of the carriage 4 as in the first embodiment, the carriage 4 will not start moving unless a short-circuit is detected in Step S4. In contrast, the present embodiment performs the movement control for the carriage 4 independently from the start control process. Therefore, the carriage 4 can move if the flux is caught between the tip surface 8a and the workpiece W and hinders the detection of a short circuit. In this case, by the carriage 4 moving as indicated by the bold arrow shown in Fig. 8, the electrode 8 moves with the carriage 4 relative to the workpiece W. This releases or breaks the flux caught between the tip surface 8a and the workpiece W, allowing the electrode 8 and the workpiece W to come into contact with each other.

In the present embodiment again, at the start of welding, the control unit 1 stops the feeding of the welding wire upon detecting a short circuit. The control unit 1 then starts the output of the welding current without passing the start current for generating an arc. Thereafter, when the detection voltage Vd reaches or exceeds the voltage threshold $V_0$, the control unit 1 starts the feeding of the welding wire at the welding feed speed. Therefore, the operator only needs to set the voltage threshold $V_0$, so that the parameter adjustment is easy. The start control process at the start of welding can be commonly used for various arc start methods. Therefore, the control at the start of welding does not need to be changed depending on the arc start method. The present embodiment has a configuration in common with the first and the second embodiments, thereby achieving the same effect as the first and the second embodiments.

According to the start control process of the present embodiment, flux is first applied (S1), and then the feeding of the welding wire at an initial feed speed for short-circuit detection is started (S2). In the present embodiment again, the tip surface 8a of the electrode 8 is inclined with respect to the orthogonal plane 9. Therefore, it is possible to reduce the possibility that the flux is caught between the tip surface 8a and the workpiece W when the electrode 8 is inserted into the flux 79. Further, according to the start control process of the present embodiment, the movement control for the carriage 4 is performed independently from the start control process. Therefore, if the flux is caught between the tip surface 8a and the workpiece W, the flux can be removed by moving the carriage 4, so that the electrode 8 and the workpiece W can come into contact with each other. Also, in the present embodiment, the tip surface 8a of the electrode 8 faces the opposite direction to the direction of travel of the carriage 4. Therefore, as compared with the case where the tip surface 8a of the electrode 8 faces in the direction of travel of the carriage 4, the possibility that the flux is caught between the tip surface 8a and the workpiece W when the electrode 8 is inserted into the flux 79 is further reduced.

The submerged arc welding system according to the present disclosure is not limited to the foregoing embodiments. Various modifications in design may be made freely in the specific structure of each part of the submerged arc welding system according to the present disclosure.

REFERENCE NUMERALS

A1 to A3: Welding system 1: Control unit
2: Welding power supply 25: Inverter circuit
27: Voltage sensor 5: Wire feeder W: Workpiece

**Claims**

1. A submerged arc welding system for performing submerged arc welding, the system comprising:

    a welding power supply including an inverter circuit and configured to supply electric power;
    a wire feeder configured to feed a welding wire;
    a control unit configured to control the welding power supply and the wire feeder; and
    a voltage sensor configured to detect voltage applied between a tip of the welding wire and a workpiece,

wherein the control unit is configured to:

    cause the wire feeder to feed the welding wire at an initial feed speed at start of welding;
    cause the wire feeder to stop the feeding of the welding while also causing the welding power supply to start outputting welding current, when a tip of the welding wire shorts to the workpiece; and
    cause the wire feeder to start feeding the welding wire at a welding feed speed for welding, when a detection voltage detected by the voltage sensor reaches or exceeds a voltage threshold.

2. The submerged arc welding system according to claim 1, wherein the welding power supply has output characteristics that match predetermined external characteristics, and
a characteristic line representing the external characteristics has a slope that is equal to or greater than -40V/100A and equal to or less than -0.5V/100A.

3. The submerged arc welding system according to claim 1, wherein the voltage threshold is equal to or greater than 20V and equal to or less than 40V.

4. The submerged arc welding system according to claim 1, wherein the control unit causes the welding power supply to start outputting a short-circuit release current when the detection voltage is less than a predetermined voltage after a predetermined time has elapsed since the welding power supply starts outputting the welding current.

5. The submerged arc welding system according to any one of claims 1 to 4, wherein the welding wire includes a tip surface that is inclined with respect to a plane that is orthogonal to a direction in which the welding wire extends.

6. The submerged arc welding system according to claim 5, further comprising a carriage that carries the wire feeder and that is configured to move along a welding line,
wherein the control unit controls movement of the carriage independently from control of the wire feeder and the welding power supply at the start of welding.

FIG.1A

FIG.1B

FIG.2

FIG.3

```
                        ┌─────────────┐
                        │    START    │
                        └──────┬──────┘
                               │           S1
                        ┌──────▼──────┐
                        │ APPLY FLUX  │
                        └──────┬──────┘
                               │           S2
                        ┌──────▼──────┐
                        │START FEEDING│
                        └──────┬──────┘
                               │           S3
                        ┌──────▼────────┐
                        │APPLY DC VOLTAGE│
                        └──────┬────────┘
                               │           S4
                          ╱────▼────╲
                    ┌────◄  SHORT-CIRCUIT ►
                    │  NO ╲ DETECTED? ╱
                    │      ╲────┬────╱
                    │        YES│      S5
                    │    ┌──────▼──────┐
                    │    │STOP FEEDING │
                    │    └──────┬──────┘
                    │           │           S6
                    │    ┌──────▼──────────────┐
                    │    │OUTPUT WELDING CURRENT│
                    │    └──────┬──────────────┘
                    │           │           S7
                    │      ╱────▼────╲
              ┌────◄  Vd ≧ V₀  ? ►
              │  NO  ╲────┬────╱
              │        YES│      S8
              │    ┌──────▼──────┐
              │    │RESTART WELDING│
              │    └──────┬──────┘
              │           │           S9
              │    ┌──────▼────────────────┐
              │    │START CARRIAGE MOVEMENT│
              │    └──────┬────────────────┘
              │           │
              │    ┌──────▼──────┐
              │    │     END     │
              │    └─────────────┘
```

Flowchart steps:

START

S1: APPLY FLUX

S2: START FEEDING

S3: APPLY DC VOLTAGE

S4: SHORT-CIRCUIT DETECTED? — NO (loop back to S4) / YES

S5: STOP FEEDING

S6: OUTPUT WELDING CURRENT

S7: $Vd \geqq V_0$ ? — NO (loop back to S7) / YES

S8: RESTART WELDING

S9: START CARRIAGE MOVEMENT

END

FIG.4

(a) START SIGNAL

ON

OFF

(b) DETECTION
VOLTAGE Vd

NO-LOAD
VOLTAGE

VOLTAGE
THRESHOLD $V_0$

0

(c) DETECTION CURRENT

0

(d) FEED SPEED

SLOW-DOWN
SPEED

0

t0    t1    t2

START PERIOD

14

FIG.5

(a) START SIGNAL

(b) DETECTION VOLTAGE Vd

(c) DETECTION CURRENT

(d) FEED SPEED

START PERIOD

FIG.6

(a) START SIGNAL

ON

OFF

(b) DETECTION
VOLTAGE Vd

NO-LOAD
VOLTAGE

VOLTAGE
THRESHOLD $V_0$
PREDETERMINED
VOLTAGE $V_x$

0

(c) DETECTION CURRENT

SHORT-CIRCUIT
RELEASE CURRENT $I_x$

0

(d) FEED SPEED

SLOW-DOWN
SPEED

0

t0          t1          $T_x$   t3  t4  t2

START PERIOD

FIG.7

A2

FIG.8

A3

Europäisches
Patentamt
European
Patent Office
Office européen
des brevets

## EUROPEAN SEARCH REPORT

Application Number

EP 25 15 8667

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 114 147 319 A (JOINT STOCK AGENCY FELLOWSHIP) 8 March 2022 (2022-03-08) | 1,3-6 | INV. B23K9/067 B23K9/18 |
| Y | * figures * | 2 | |
| Y | US 2 532 411 A (KENNEDY HARRY E) 5 December 1950 (1950-12-05) * column 3, lines 36-45 * | 2 | |

TECHNICAL FIELDS
SEARCHED (IPC)

B23K

The present search report has been drawn up for all claims

| Place of search | Date of completion of the search | Examiner |
|---|---|---|
| Munich | 10 July 2025 | Caubet, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 15 8667

This annex lists the patent family members relating to the patent documents cited in the above-mentioned European search report.
The members are as contained in the European Patent Office EDP file on
The European Patent Office is in no way liable for these particulars which are merely given for the purpose of information.

10-07-2025

| Patent document cited in search report | | Publication date | Patent family member(s) | | Publication date |
|---|---|---|---|---|---|
| CN 114147319 | A | 08-03-2022 | CN | 114147319 A | 08-03-2022 |
| | | | JP | 7497259 B2 | 10-06-2024 |
| | | | JP | 2022045137 A | 18-03-2022 |
| | | | KR | 20220033025 A | 15-03-2022 |
| US 2532411 | A | 05-12-1950 | NONE | | |

EPO FORM P0459

For more details about this annex : see Official Journal of the European Patent Office, No. 12/82

**EP 4 609 978 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2022045136 A